# EUROPÄISCHE PATENTSCHRIFT

(11) **EP 0 892 692 B1**
(45) Veröffentlichungstag und Bekanntmachung des Hinweises auf die Patenterteilung: **22.03.2000**
(21) Anmeldenummer: 97915480.4
(22) Anmeldetag: 04.04.1997
(51) Int. Cl.: B23K 26/10

(54) **VORRICHTUNG ZUM SCHWEISSEN UND/ODER SCHNEIDEN**
WELDING AND/OR CUTTING DEVICE
DISPOSITIF DE SOUDAGE ET/OU DE COUPE

(30) Priorität: 04.04.1996 DE 29606375 U
(43) Veröffentlichungstag der Anmeldung: 27.01.1999
(73) Patentinhaber: KUKA Schweissanlagen GmbH, 86165 Augsburg (DE)
(72) Erfinder: ENGLHARD, Anton, D-86574 Petersdorf (DE)
(74) Vertreter: Ernicke, Hans-Dieter, Dipl.-Ing.
(86) Internationale Anmeldenummer: EP9701683
(87) Internationale Veröffentlichungsnummer: WO9737808

(56) Entgegenhaltungen:
- WO-A-95/16540
- DE-A- 4 403 999
- FR-A- 2 636 554
- FR-A- 2 678 193
- GB-A- 2 053 060
- PATENT ABSTRACTS OF JAPAN vol. 012, no. 061 (M-671), 24.Februar 1988 & JP 62 207582 A (NIPPON STEEL CORP;OTHERS: 02), 11.September 1987,

## Beschreibung

Die Erfindung betrifft eine Schweiß- oder Schneidvorrichtung, insbesondere zum Laserschweißen, Laserschneiden oder dergleichen mit den Merkmalen im Oberbegriff des Hauptanspruches.

Eine solche manipulatorgeführte Schweißvorrichtung ist aus der FR-A-2 678 193 bekannt. Sie besitzt einen Laserkopf mit einer Focusiereinrichtung, der mittels einer Führungseinrichtung beweglich an der Halterung des Manipulators befestigt ist. Die Führungseinrichtung hat eine Andrückrolle, die auf das Werkstück gepreßt wird. Die Andrückrolle und der Laserkopf sind gemeinsam höhenverstellbar und auch drehbar gelagert. Der Rollenhalter ist mit der Focusiereinrichtung des Laserkopfes verbunden, so daß nur gemeinsame Bewegungen ausgeführt werden können. Die bekannte Schweißvorrichtung zwingt zu einer exakten Programmierung der zu verfolgenden Bahn zur Steuerung des Manipulators. Seitenkorrekturen sind nur mittels einer Umorientierung der Roboterhand möglich. Dabei muß außerdem die Andrückrolle gedreht werden. Die Bahnkorrekturen sind dadurch erschwert und lassen sich nur in einem relativ geringen Umfang ausführen. Eine schnelle Reaktion auf Bauteiltoleranzen, Nahtverwerfungen etc. ist nicht möglich.

Die FR-A-2 636 554 zeigt eine ähnliche manipulatorgeführte Schweißvorrichtung. Auch hier sind der Laserschweißkopf und die Andrückrolle starr miteinander verbunden und können nur gemeinsam über die Führungseinrichtung relativ zum Werkstück und zur Roboterhand bewegt werden. Eine Relativbewegung zwischen dem Laserschweißkopf und der Andrückrolle ist nicht möglich.

Ähnliche Schweißvorrichtungen sind ferner aus der DE-A-44 03 999 und der JP-A-62 207 582 bekannt. Hier sind in beiden Fällen ebenfalls der Schweißkopf und die Andrückrolle starr miteinander verbunden und gemeinsam an der Führungseinrichtung gelagert. Sie können damit nur zusammen verstellt werden.

Aus der GB-A-2 053 060 ist eine Positionier- und Schweißvorrichtung für Rohre von Kernkraftanlagen bekannt. Der dreidimensional bewegliche Schweißkopf ist an einem sehr langen Arm gehalten und wirkt mit einer Positionierrolle zusammen, mit der das Rohrende abgetastet und verfolgt wird.

Die Erfindung hat zur Aufgabe, eine Schweiß- und/oder Schneidvorrichtung aufzuzeigen, die flexibler und besser handhabbar ist.

Die Erfindung löst diese Aufgabe mit den Merkmalen im Hauptanspruch.
Die Erfindung hat den Vorteil, daß der Laserkopf unabhängig von der Andrückrolle mittels der Stellvorrichtung Bewegungen quer oder schräg zur verfolgten Bahn ausführen kann. Diese Bewegungen können sehr schnell erfolgen. Dadurch ist es möglich, die Bewegungsbahn des Schweißkopfes anhand der Ist-Lage der Schweiß- oder Schneidnaht mittels eines Nahtdetektors zu korrigieren. Dadurch läßt sich eine wesentlich höhere Schweiß- oder Schneidpräzision erreichen. Werkstücktoleranzen und sonstige Fehlereinflüsse werden kompensiert.

Die eigenständige Beweglichkeit des Schweißkopfes gegenüber der Andrückrolle und der vom Manipulator verfolgten Bahn hat auch noch andere Vorteile. Der Schweißkopf kann dadurch beliebig und eigenständig gegenüber der Naht orientiert werden, um besondere Werkstück- und Nahtgeometrien bearbeiten zu können. Zudem kann die Neigung des Schweißkopfes beliebig verändert werden.

Die Manipulatorhand muß dabei keine Zusatzbewegungen ausführen, sondern kann auf ihrer programmierten Bahn verbleiben. Auch eine Umorientierung der Andrückrolle zum Ausfahren von Ecken, Bögen oder sonstigen Bahnabweichungen ist nicht erforderlich. Die Stellvorrichtung, die den Schweißkopf entsprechend bewegt, kann dazu von einer Programmsteuerung oder einer anderen geeigneten Quelle zur Vorgabe der Bewegung gesteuert werden. Von besonderer Bedeutung ist, daß diese Schweißkopfbewegungen während einer Bahnverfolgung stattfinden und dieser Bahnbewegung überlagert werden.

Von besonderem Vorteil ist ferner, daß die erfindungsgemäße Schweißvorrichtung die Anordnung von Schweißzusatzvorrichtungen ermöglicht, die von der Stellvorrichtung gemeinsam mit dem Schweißkopf bewegt werden. Diese Schweißzusatzvorrichtungen können unterschiedlich ausgebildet sein. In den bevorzugten Ausführungsformen handelt es sich um eine Drahtzuführung, die gegebenenfalls auch zu einem Lichtbogen- oder Plasma-Schweißbrenner mit oder ohne Schutzgaszuführung ergänzt und ausgebaut werden kann. In einer weiteren vorteilhaften Variante kann außerdem eine Abdichteinrichtung vorgesehen sein, die die Schweißnaht mit einem Kleber oder dergleichen versiegelt.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Schweißvorrichtung in Stirnansicht mit einem Laserkopf und einer Schweißzusatzvorrichtung,
- Figur 2:: eine Variante zu Figur 1 mit einer weiteren Schweißzusatzvorrichtung und
- Figur 3:: eine weitere Variante zu Figur 1 mit einem Schwenkanschluß.

In den Zeichnungen ist eine Schweiß- oder Schneidvorrichtung (1) dargestellt, die vorzugsweise als Laserschweiß- oder Laserschneidvorrichtung ausgebildet ist. Sie wird von einem Manipulator (2) geführt, der vorzugsweise als mehrachsiger Industrieroboter ausgebildet ist und eine mehrachsige Hand (3) besitzt. Der Manipulator (2) und die Hand (3) sind andeutungsweise dargestellt. Die Hand (3) besitzt eine rotatorische Abtriebsachse oder Handachse (31).

Der Schweißkopf (7) ist im gezeigten Ausführungsbeispiel als Laserkopf ausgebildet, der mittels einer Führungseinrichtung (16) an der Hand (3) in ein oder mehreren translatorischen und/oder rotatorischen Achsen beweglich angeordnet ist. Der Laserkopf (8) kann sich dadurch unabhängig von der Hand (3) bewegen und insbesondere entlang der verfolgten Bahn orientieren.

Der Laserkopf wird vom Manipulator (2) über die Hand (3) entlang einer vorzugsweise vorprogrammierten und in der Manipulatorsteuerung gespeicherten Bahn entlang einer Naht (6) bewegt. Die Naht (6) kann eine Schweiß- oder Schneidnaht sein und beliebige Nahtformen haben. Es kann sich um eine Kehlnaht, eine Stumpfnaht oder dergleichen andere beliebige Varianten handeln.

Die Führungseinrichtung (16) besitzt ein oder mehrere Andrückrollen (11) oder ein oder mehrere andere geeignete längs der Werkstückoberfläche gleitend oder rollend bewegbare Andrückelemente zum Anpressen der Werkstücke (4,5). Vorzugsweise ist nur eine einzelne von oben auf die Werkstücke wirkende Andrückrolle (11) vorgesehen. Alternativ können auch mehrere und zangenartig von oben und unten angreifende Andrückrollen vorhanden sein.

Die Andrückrolle (11) ist in Bewegungsrichtung (7) bzw. in Längsrichtung der Naht (6) seitlich versetzt neben dem Laserkopf (8) angeordnet. Ihr Andrückpunkt befindet sich vorzugsweise mit einem gewissen Abstand quer versetzt in Höhe des Wirkpunktes (10) des Schweißkopfes (8). Die Andrückrolle (11) ist frei drehbar und so angeordnet, daß sie längs der verfolgten Naht (6) laufen kann.

Der Schweißkopf (8) ist in der bevorzugten Ausführungsform als Laserkopf ausgebildet. Er besitzt eine Focusiereinrichtung, mit der der auf beliebige Weise erzeugte und zugeführte Laserstrahl auf einen Wirkpunkt (10) focusiert wird. Die Zuführung kann z.B. von einer externen Laserstrahlquelle über Lichtleitfaserbündel oder Spiegel erfolgen.

Zwischen der Andrückrolle (11) und dem Laserkopf (8) kann in der Vertikalen bzw. in Richtung der Handachse (31) eine starre Verbindung bestehen. Der Laserkopf (8) ist dabei in der Höhe gegenüber dem untersten Rollenpunkt so ausgerichtet, daß der Wirkpunkt (10) sich in der gewünschten Höhe befindet. Wenn die Andrückrolle (11) auf der Oberfläche des obenliegenden Werkstücks (4) aufsetzt, ist dadurch automatisch auch der Laserstrahl (9) zur Werkstückoberfläche positioniert.

Der Laserkopf (8) kann allerdings Relativbewegungen gegenüber der Andrückrolle (11) und gegenüber der verfolgten Naht (6) ausführen. Zu diesem Zweck ist eine Stellvorrichtung (19) vorgesehen, die mindestens eine eigenständige translatorische und/oder rotatorische Bewegungsachse (23,27,29,30) für den Laserkopf (8) bietet. Durch die Stellvorrichtung (19) kann der Laserkopf (8) während der Bahnverfolgung seine Stellung gegenüber der Andrückrolle (11) ändern. Die Andrückrolle (11) und die Hand (3) brauchen dabei Ihre programmierte und verfolgte Bahn nicht zu ändern.

Im gezeigten Ausführungsbeispiel besteht die Führungseinrichtung (16) aus einem am Abtriebsflansch der Hand (3) befestigten Gestell (17). Die Stellvorrichtung (19) kann an diesem Gestell (17) direkt und starr befestigt sein. In der bevorzugten Ausführungsform ist jedoch am Gestell (17) ein Schlitten (18) höhenverstellbar gelagert. Die Stellvorrichtung (19) ist dann am Schlitten (18) angeordnet. Der Schlitten (18) kann mit einer rückstellenden Feder oder mit einem sonstigen Rückstellantrieb ausgerüstet sein. Der Schlitten (18) ermöglicht Ausweichbewegungen des Schweißkopfes (8) und der Andrückrolle (11) bei Unebenheiten in der Oberfläche des obenliegenden Werkstücks (4).

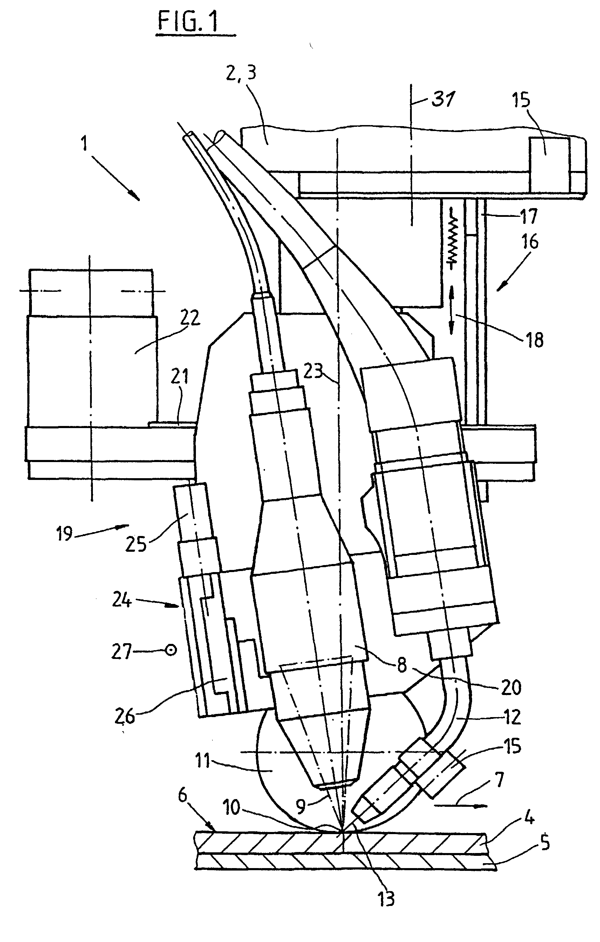

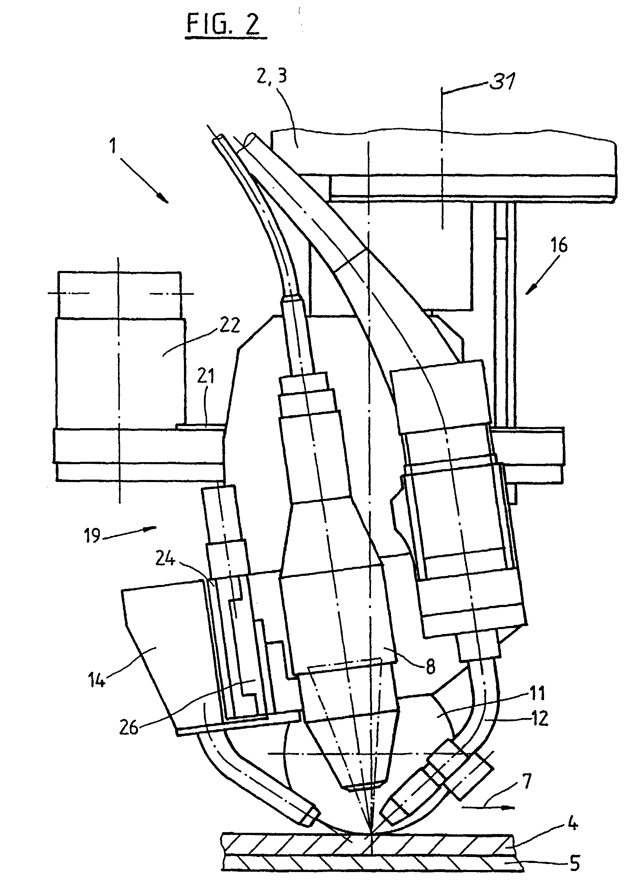

Die Stellvorrichtung (19) besteht im gezeigten Ausführungsbeispiel von Figur 1 und 2 aus einer Dreheinrichtung (21) und einer Verschiebeeinrichtung (24). Die Dreheinrichtung (21) kann auch der Führungseinrichtung (16) zugeordnet werden, weil sie gleichermaßen auf den Schweißkopf (8) und die Andrückrolle (11) einwirken und beide gemeinsam drehen kann. Die Verschiebeeinrichtung (24) ist hingegen vorzugsweise allein für den Schweißkopf (8) vorgesehen.

Die Dreheinrichtung (21) ist am Schlitten (18) befestigt. Bei einer starren Führung ist sie am Gestell (17) befestigt. Sie besitzt einen eigenständigen Drehantrieb (22), der von der Manipulatorsteuerung oder einer eigenständigen Steuerung der Schweißvorrichtung (1) gesteuert werden kann. Gegebenenfalls kann er auch von einem nachfolgend noch näher beschriebenen Nahtdetektor (15) über eine geeignete Steuerung angesprochen werden.

Die Dreheinrichtung (21) führt Drehbewegungen um eine vorzugsweise aufrechte und parallel oder fluchtend zur Abtriebsachse (31) gerichtete Drehachse (23) aus, die üblicherweise senkrecht auf der Oberfläche des Werkstücks (4) steht. Die Drehachse (23) verläuft durch den Wirkpunkt (10). Auf der Abtriebsseite hat die Dreheinrichtung (21) einen Träger (20), an dem einerseits die Andrückrolle (11) gelagert ist. Andererseits ist an dem Träger (20) auch die Verschiebeeinrichtung (24) für den Schweißkopf (8) befestigt. Der Schweißkopf (8) und die Andrückrolle (11) können dadurch um die Drehachse (23) bzw. um den Wirkpunkt (10) rotieren.

Die Verschiebeeinrichtung (24) besteht im gezeigten Ausführungsbeispiel aus einer Schlittenführung, die translatorische Bewegungen ausführt. Sie hat ein oder zwei in der Zeichnung horizontale Verschiebeachsen (27), die vorzugsweise quer oder schräg zur Naht (6) bzw. der Bewegungsrichtung (7) und quer zur Abtriebsachse (31) ausgerichtet sind. Die Verschiebeeinrichtung (24) hat einen oder mehrere Schubantriebe (25). Am vorzugsweise schlittenförmigen Abtriebsteil (26) der Verschiebeeinrichtung (24) ist der Schweißkopf (8) befestigt. Die Befestigung kann über einen Schwenkanschluß (nicht dargestellt) erfolgen, mit dem der Schweißkopf (8) in der in Figur 1 und 2 gezeigten Weise schräggestellt werden kann. Der Laserstrahl (9) schließt dadurch mit der Naht (6) bzw. der Bewegungsrichtung (7) einen stumpfen Winkel und mit der Drehachse (23) einen spitzen Winkel ein.

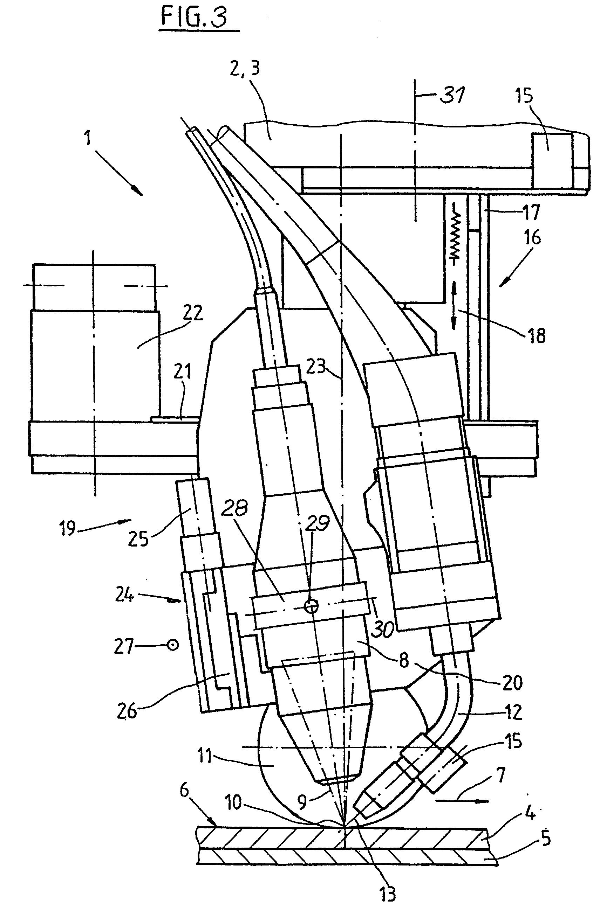

Figur 3 zeigt hierzu eine weitere Variante, bei der der Schwenkanschluß (28) mindestens eine Verstell-Achse (29,30) mit einem geeigneten Antrieb nebst Steuerung (nicht dargestellt) aufweist und eine Veränderung der Schweißkopfneigung gegenüber der verfolgten Bahn (6,7) im Betrieb gestattet. Die eine Verstell-Achse (29) ist vorzugsweise quer zur verfolgten Bahn bzw. Bewegungsrichtung (7) und quer zur Abtriebsachse (31) orientiert. Die andere Verstell-Achse ist längs der Bewegungsrichtung (7) und quer zur Abtriebsachse (31) orientiert.

Die Verschiebeeinrichtung (24) und/oder der Schwenkanschluß (28) sind ebenfalls eigenständig antreib- und steuerbar. Die Steuerung kann von der Manipulatorsteuerung oder von einer Schweißsteuerung aus erfolgen. In der bevorzugten Ausführungsform ist hierzu ein Nahtdetektor (15) vorgesehen. Dieser kann eine beliebige Ausgestaltung haben. In der bevorzugten Ausführungsform handelt es sich um einen optischen Sensor, der die Ist-Lage der Naht (6) in Bewegungsrichtung (7) vorauseilend erfaßt und Abweichungen der Ist-Lage von der Soll-Lage signalisiert. Entsprechend der Sensorsignale kann der Schweißkopf (8) über die Verschiebeeinrichtung (24) gegenüber der Naht (6) nachgeführt werden. Er führt dazu quer oder schräg zur Naht (6) gerichtete Stellbewegungen aus. Die Stellbewegungen finden on-line statt und werden der vom Manipulator (2) vorgegebenen Bahnbewegung überlagert. Gleiches gilt für eine veränderte Neigungsorientierung über den Schwenkanschluß (28).

Am Abtriebsteil (26) der Verschiebeeinrichtung (24) können neben dem Schweißkopf (8) ein oder mehrere Schweißzusatzvorrichtungen (12) angeordnet sein. Diese werden durch die starre Verbindung gemeinsam mit dem Schweißkopf (8) über die Stellvorrichtung (19) relativ zur Naht (6) und zur Andrückrolle (11) bewegt.

Im Ausführungsbeispiel von Figur 1 ist eine Schweißzusatzvorrichtung (12) in Form einer Drahtzuführung vorgesehen. Der in geeigneter Weise kontinuierlich zugeführte Draht (13) ist auf den Wirkpunkt (10) ausgerichtet. Der Draht (13) wird vom Laserstrahl (9) direkt oder im Schmelzbad auf der Werkstückoberfläche abgeschmolzen. Die Drahtzuführung (12) hat in Verbindung mit einem Laserkopf (8) den Vorteil, daß die Schweißintensität und die Schweißwirkung wesentlich verbessert werden. Dies ist insbesondere für die Verschweißung von zwei Blechen (4,5) von Vorteil, wenn an der Schweißstelle Spalte bestehen, die allein von dem durch den Laserstrahl (9) abgeschmolzenen Kantenmaterial nicht ausreichend gefüllt werden können.

Die Drahtzuführung (12) kann in Verbindung mit einer Schutzgasatmosphäre stehen, die aus der Drahtzuführung selber zugeleitet wird oder von der gegenüberliegenden Seite kommt. Die Drahtzuführung (12) kann ferner Bestandteil einer Lichtbogen-Schweißeinrichtung sein. Durch die Kombination des Laserkopfes (8) mit dieser Lichtbogen-Schweißeinrichtung wird eine besonders gute Schweißwirkung erzielt. Durch die gemeinsame Focusierung am Wirkpunkt (10) können verbesserte Ergebnisse bezüglich Schweißqualität und -geschwindigkeit erzielt werden. Günstig ist ferner eine Verbesserung in der Streckenenergie.

Die Schweißzusatzvorrichtung (12) ist vorzugsweise in Bewegungsrichtung (7) voreilend vor dem Schweißkopf (8) angeordnet. Dies ist besonders bei einem schräggestellten Schweißkopf (8) von Vorteil.

Figur 2 zeigt eine Variante mit einer zweiten Schweißzusatzvorrichtung. Hierbei kann es sich z. B. um eine Abdichteinrichtung handeln, die einen Kleber oder ein anderes geeignetes Präparat auf die Schweißnaht hinter dem Wirkpunkt (10) aufbringt. Durch die Restwärme härtet der Kleber schnell aus und versiegelt die Schweißnaht. Dabei werden etwaige Poren verschlossen. Die Korrosionsempfindlichkeit der Schweißnaht wird wesentlich verbessert.

Die Abdichteinrichtung (14) ist ebenfalls am Abtriebsteil (26) angeordnet und befindet sich in Bewegungsrichtung (7) nacheilend hinter dem Schweißkopf (8). Sie kann gegebenenfalls mit Distanz angeordnet sein und über einen Bügel oder dergleichen anderen Halter mit dem Abtriebsteil (26) verbunden sein.

Abwandlungen der gezeigten Ausführungsformen sind in verschiedener Weise möglich. Zum einen kann auf die Dreheinrichtung (21) verzichtet werden. Die Andrückrolle (11) ist dann direkt am Gestell (17) bzw. dem Schlitten (18) der Führungseinrichtung (16) befestigt. Die Stellvorrichtung (19) besteht dann nur aus der Verschiebeinrichtung (24), die ebenfalls am Gestell (17) oder am Schlitten (18) befestigt ist. In einer weiteren Variante kann die Zuordnung von Dreheinrichtung (21) und Verschiebeeinrichtung (24) vertauscht sein. Die Dreheinrichtung (21) ist dann an der Verschiebeeinrichtung (24) gelagert. Die Andrückrolle (11) ist dabei gegebenenfalls direkt an der Führungseinrichtung (16) befestigt. Der Schweißkopf (8) kann gegenüber der Andrückrolle (11) und der Naht (6) seitlich verschoben und außerdem verdreht werden. Gegebenenfalls kann die Stellvorrichtung (19) auch zwei Dreheinrichtungen aufweisen.

Die Verschiebeeinrichtung (24) kann ferner andere Bewegungsachsen aufweisen. Eine Achse kann z.B. für eine Höhenverstellung des Schweißkopfs (8) gegenüber der Andrückrolle (11) quer zur Naht (6) bzw. Bewegungsrichtung (7) und längs der Handachse (31) ausgerichtet sein. In einer weiteren Variante ist eine Achse längs der Naht (6) bzw. Bewegungsrichtung (7) und quer zur Handachse (31) ausgerichtet für eine Verstellung des Schweißkopfes (8) in Bahnrichtung vor oder hinter die Position der Andrückrolle (11).

In einer weiteren Abwandlung kann der Schwenkanschluß (28) anstelle der Verschiebeeinrichtung (24) vorgesehen sein und reine Schwenk- oder Drehbewegungen ausführen und den Schweißkopf (8) entsprechend rotatorisch verstellen. Der Schwenkanschluß (28) kann in Abwandlung zum gezeigten Ausführungsbeispiel am Gestell (17), am Schlitten (18) oder an der Dreheinrichtung (21) angeordnet sein. Die verschiedenen translatorischen und/oder rotatorischen Bewegungsmöglichkeiten des Schweißkopfes (8) können auch in beliebiger Weise gemischt bestehen.

Zudem ist es möglich, über mehrere miteinander brückenartig verbundene Andrückrollen (11) und entsprechende rotatorische Zusatzachsen eine Winkelausrichtung der Stellvorrichtung (19) und des Schweißkopfes (8) nach der Krümmung der Werkstückoberfläche zu erreichen. Die vorzugsweise in Bewegungsrichtung (7) symmetrisch vor und hinter bzw. in Querrichtung beidseits des Laserstrahls (9) angeordneten Andrückrollen (11) richten den Träger (20) mit der Stellvorrichtung (19) um eine oder zwei horizontale Zusatz-Schwenkachsen so gegenüber der Werkstückoberfläche aus, das deren Winkelfehler kompensiert werden und der Schweißkopf (8) sowie der Laserstrahl (9) ihre gewünschte Neigung zur Werkstückoberfläche behalten.

### BEZUGSZEICHENLISTE

- 1: Schweißvorrichtung
- 2: Manipulator, Industrieroboter
- 3: Hand
- 4: Werkstück, Blech
- 5: Werkstück, Blech
- 6: Naht, Kante, Stoß
- 7: Bewegungsrichtung
- 8: Schweißkopf, Laserkopf
- 9: Laserstrahl
- 10: Wirkpunkt, Fokus
- 11: Andrückrolle
- 12: Schweißzusatzvorrichtung, Drahtzuführung, Brenner
- 13: Draht
- 14: Schweißzusatzvorrichtung, Abdichteinrichtung
- 15: Nahtdetektor, Sensor
- 16: Führungseinrichtung
- 17: Gestell
- 18: Schlitten
- 19: Stellvorrichtung
- 20: Träger
- 21: Dreheinrichtung
- 22: Drehantrieb
- 23: Drehachse
- 24: Verschiebeeinrichtung
- 25: Schubantrieb
- 26: Abtriebsteil, Schlitten
- 27: Verschiebeachse
- 28: Schwenkanschluß
- 29: Verstell-Achse
- 30: Verstell-Achse
- 31: Abtriebsachse, Handachse

## Patentansprüche

1. Schweißvorrichtung zum Schweißen und/oder Schneiden, mit einem Schweißkopf, insbesondere einem Laserkopf, mit einer Führungseinrichtung und mindestens einer Andrückrolle, wobei die Führungseinrichtung mittels einer Halterung an der Hand eines Manipulators befestigbar ist, dadurch **gekennzeichnet,** daß die Führungseinrichtung (16) zusätzlich eine ein- oder mehrachsig bewegliche Stellvorrichtung (19) aufweist, mit der der Schweißkopf (8) relativ zur Andrückrolle (11) verstellbar ist.

2. Schweißvorrichtung nach Anspruch 1, dadurch **gekennzeichnet,** daß die Stellvorrichtung (19) eine Verschiebeeinrichtung (24) mit mindestens einer im wesentlichen quer zur Bewegungsrichtung (7) und zur Handabtriebsachse (31) gerichtete Verschiebeachse (27) aufweist, an deren Abtriebsteil (26) der Schweißkopf (8) angeordnet ist.

3. Schweißvorrichtung nach Anspruch 1 oder 2, dadurch **gekennzeichnet,** daß die Stellvorrichtung (19) eine Dreheinrichtung (21) aufweist.

4. Schweißvorrichtung nach Anspruch 1, 2 oder 3, dadurch **gekennzeichnet,** daß die Verschiebeeinrichtung (24) an der Dreheinrichtung (21) gelagert ist.

5. Schweißvorrichtung nach Anspruch 1, 2, 3 oder 4, dadurch **gekennzeichnet,** daß mindestens eine Verschiebeachse (27) quer oder schräg zur Andrückrolle (11) ausgerichtet ist.

6. Schweißvorrichtung nach Anspruch 1 oder einem der folgenden, dadurch **gekennzeichnet,** daß die Andrückrolle (11) an der Dreheinrichtung (21) angeordnet ist.

7. Schweißvorrichtung nach Anspruch 1 oder einem der folgenden, dadurch **gekennzeichnet**, daß die Stellvorrichtung (19) mit der Andrückrolle (11) höhenverstellbar an der Führungseinrichtung (16) gelagert ist.

8. Schweißvorrichtung nach Anspruch 1 oder einem der folgenden, dadurch **gekennzeichnet,** daß die Stellvorrichtung (19) einen Schwenkanschluß (28) mit mindestens einer im wesentlichen quer und/oder längs zur Bewegungsrichtung (7) orientierten Verstell-Achse (29,30) aufweist, an dem der Schweißkopf (8) angeordnet ist.

9. Schweißvorrichtung nach Anspruch 1 oder einem der folgenden, dadurch **gekennzeichnet,** daß an der Stellvorrichtung (19) ein oder mehrere Schweißzusatzvorrichtungen (12,14) angeordnet und mit dem Schweißkopf (8) gemeinsam verstellbar sind.

10. Schweißvorrichtung nach Anspruch 9, dadurch **gekennzeichnet,** daß die Schweißzusatzvorrichtung (12) als Drahtzuführung ausgebildet ist.

11. Schweißvorrichtung nach Anspruch 9 oder 10, dadurch **gekennzeichnet**, daß die Schweißzusatzvorrichtung (12) als Schutzgas- oder Plasma-Schweißvorrichtung ausgebildet ist.

12. Schweißvorrichtung nach Anspruch 9, 10 oder 11, dadurch **gekennzeichnet**, daß die Schweißzusatzvorrichtung (14) als Abdichteinrichtung zum Versiegeln der Schweißnaht ausgebildet ist.

13. Schweißvorrichtung nach einem der Ansprüche 9 bis 12, dadurch **gekennzeichnet,** daß die Drahtzuführung (12) bzw. die Schutzgas-Schweißvorrichtung (12) auf den gleichen Wirkpunkt (10) wie der Laserkopf (8) ausgerichtet ist.

14. Schweißvorrichtung nach einem der Ansprüche 9 bis 13, dadurch **gekennzeichnet,** daß die Drahtzuführung (12) bzw. die Schutzgas-Schweißvorrichtung (12) in Bewegungsrichtung (7) voreilend vor dem Schweißkopf (8) angeordnet ist.

15. Schweißvorrichtung nach einem der Ansprüche 9 bis 14, dadurch **gekennzeichnet,** daß die Abdichteinrichtung (14) in Bewegungsrichtung (7) nacheilend hinter dem Schweißkopf (8) angeordnet ist.

16. Schweißvorrichtung nach Anspruch 1 oder einem der folgenden, dadurch **gekennzeichnet,** daß die Führungseinrichtung (16) einen Nahtdetektor (15) zur Steuerung der Stellvorrichtung (19) aufweist.

## Claims

1. Welding device for welding and/or cutting, with a welding head, in particular a laser head, with a guiding device and with at least one pressure-exerting roller, it being possible for the guiding device to be fastened by means of a securing mechanism on the hand of a manipulator, characterized in that the guiding device (16) additionally has an adjusting device (19), which can be moved in one or more axes and with which the welding head (8) can be adjusted in relation to the pressure-exerting roller (11).

2. Welding device according to Claim 1, characterized in that the adjusting device (19) has a displacing device (24) with at least one displacing spindle (27), which is directed essentially transversely with respect to the direction of movement (7) and with respect to the manual power take-off spindle (31) and on the power take-off part (26) of which the welding head (8) is arranged.

3. Welding device according to Claim 1 or 2, characterized in that the adjusting device (19) has a turning device (21).

4. Welding device according to Claim 1, 2 or -3, characterized in that the displacing device (24) is mounted on the turning device (21).

5. Welding device according to Claim 1, 2, 3 or 4, characterized in that at least one displacing spindle (27) is arranged transversely or obliquely with respect to the pressure-exerting roller (11).

6. Welding device according to Claim 1 or one of the following claims, characterized in that the pressure-exerting roller (11) is arranged on the turning device (21).

7. Welding device according to Claim 1 or one of the following claims, characterized in that the adjusting device (19) is mounted with the pressure-exerting roller (11) in a height-adjustable manner on the guiding device (16).

8. Welding device according to Claim 1 or one of the following claims, characterized in that the adjusting device (19) has a swivelling connection (28) with at least one adjusting axis (29, 30), which is oriented essentially transversely and/or longitudinally with respect to the direction of movement (7) and on which the welding head (8) is arranged.

9. Welding device according to Claim 1 or one of the following claims, characterized in that one or more welding filler devices (12, 14) are arranged on the adjusting device (19) and can be adjusted together with the welding head (8).

10. Welding device according to Claim 9, characterized in that the welding filler device (12) is designed as a wire feed.

11. Welding device according to Claim 9 or 10, characterized in that the welding filler device (12) is designed as an inert-gas or plasma welding device.

12. Welding device as claimed in claim 9, 10 or 11, characterized in that the welding filler device (14) is designed as a sealing device for sealing the weld seam.

13. Welding device according to one of Claims 9 to 12, characterized in that the wire feed (12) or the inert-gas welding device (12) is aligned with the same point of action (10) as the laser head (8).

14. Welding device according to one of Claims 9 to 13, characterized in that the wire feed (12) or the inert-gas welding device (12) is arranged such that it leads the welding head (8) in the direction of movement (7).

15. Welding device according to one of Claims 9 to 14, characterized in that the sealing device (14) is arranged such that it trails the welding head (8) in the direction of movement (7).

16. Welding device according to Claim 1 or one of the following claims, characterized in that the guiding device (16) has a seam detector (15) for controlling the adjusting device (19).

## Revendications

1. Dispositif de soudage et/ou de coupe, comportant une tête de soudage, notamment une tête à laser, comportant un système de guidage et au moins un rouleau de pression, le système de guidage pouvant être fixé à l'aide d'un support sur le poignet d'un manipulateur,
**caractérisé** en ce que le système (16) de guidage comporte en plus un dispositif (19) de réglage mobile dans un ou plusieurs axes, qui permet de déplacer la tête (8) de soudage par rapport au rouleau (11) de pression.

2. Dispositif de soudage suivant la revendication 1, **caractérisé** en ce que le dispositif (19) de réglage comporte un mécanisme (24) de translation pourvu d'au moins un axe (27) de translation, qui est orienté essentiellement transversalement à la direction (7) de déplacement et à l'axe (31) de sortie du poignet et sur la partie (26) de sortie duquel est disposée la tête (8) de soudage.

3. Dispositif de soudage suivant la revendication 1 ou 2, **caractérisé** en ce que le dispositif (19) de réglage comporte un mécanisme (21) de rotation.

4. Dispositif de soudage suivant la revendication 1, 2 ou 3, **caractérisé** en ce que le mécanisme (24) de translation est monté sur le mécanisme (21) de rotation.

5. Dispositif de soudage suivant la revendication 1, 2, 3 ou 4, **caractérisé** en ce qu'au moins un axe (27) de translation est orienté transversalement ou en oblique par rapport au rouleau (11) de pression.

6. Dispositif de soudage suivant la revendication 1 ou l'une des suivantes, **caractérisé** en ce que le rouleau (11) de pression est disposé sur le mécanisme (21) de rotation.

7. Dispositif de soudage suivant la revendication 1 ou l'une des suivantes, **caractérisé** en ce que le dispositif (19) de réglage est monté, avec le rouleau (11) de pression, avec possibilité de réglage en hauteur sur le système (16) de guidage.

8. Dispositif de soudage suivant la revendication 1 ou l'une des suivantes, **caractérisé** en ce que le dispositif (19) de réglage comporte un raccord (28) pivotant pourvu d'au moins un axe (29, 30) de réglage, orienté essentiellement transversalement et/ou longitudinalement à la direction (7) de déplacement et sur lequel est disposée la tête (8) de soudage.

9. Dispositif de soudage suivant la revendication 1 ou l'une des suivantes, **caractérisé** en ce que un ou plusieurs dispositifs (12, 14) auxiliaires de soudage sont disposés sur le dispositif (19) de réglage et sont réglables conjointement avec la tête (8) de soudage.

10. Dispositif de soudage suivant la revendication 9, **caractérisé** en ce que le dispositif (12) auxiliaire de soudage est réalisé sous forme de dispositif d'apport de baguette.

11. Dispositif de soudage suivant la revendication 9 ou 10, **caractérisé** en ce que le dispositif (12) auxiliaire de soudage est réalisé sous forme de dispositif de soudage sous protection gazeuse ou au plasma.

12. Dispositif de soudage suivant la revendication 9, 10 ou 11, **caractérisé** en ce que le dispositif (14) auxiliaire de soudage est réalisé sous forme de dispositif d'étanchéité pour sceller le cordon de soudure.

13. Dispositif de soudage suivant l'une des revendications 9 à 12, **caractérisé** en ce que le dispositif (12) d'apport de baguette ou, suivant le cas, le dispositif (12) de soudage sous protection gazeuse est orienté sur le même point (10) d'action que la tête (8) de soudage.

14. Dispositif de soudage suivant l'une des revendications 9 à 13, **caractérisé** en ce que le dispositif (12) d'apport de baguette ou, suivant le cas, le dispositif (12) de soudage sous protection gazeuse est disposé avant la tête (8) de soudage dans la direction (7) de déplacement.

15. Dispositif de soudage suivant l'une des revendications 9 à 14, **caractérisé** en ce que le dispositif (14) d'étanchéité est disposé après la tête (8) de soudage dans la direction (7) de déplacement.

16. Dispositif de soudage suivant la revendication 1 ou l'une des suivantes, **caractérisé** en ce que le système (16) de guidage comporte un détecteur (15) de cordon pour commander le dispositif (19) de réglage.
